# EUROPEAN PATENT SPECIFICATION

(11) **EP 4 303 423 B1**
(45) Date of publication and mention of the grant of the patent: **23.07.2025**
(21) Application number: 23179074.2
(22) Date of filing: 13.06.2023
(51) Int. Cl.: F02D 41/00, F02D 9/02, F01M 13/02, F02M 25/06, F02D 13/02, F02M 21/02, F01M 13/04

(54) **CONTROLLER AND CONTROL METHOD FOR INTERNAL COMBUSTION ENGINE**
STEUERUNG UND STEUERUNGSVERFAHREN FÜR EINEN VERBRENNUNGSMOTOR
DISPOSITIF DE COMMANDE ET PROCÉDÉ DE COMMANDE POUR MOTEUR À COMBUSTION INTERNE

(30) Priority: 06.07.2022 JP 2022109162
(43) Date of publication of application: 10.01.2024
(73) Proprietor: TOYOTA JIDOSHA KABUSHIKI KAISHA, Toyota-shi, Aichi-ken, 471 8571 (JP)
(72) Inventor: TANAKA, Shogo, TOYOTA-SHI, AICHI-KEN, 471-8571 (JP); NAKANO, Tomohiro, TOYOTA-SHI, AICHI-KEN, 471-8571 (JP)
(74) Representative: Cabinet Beau de Loménie

(56) References cited:
- WO-A1-2020/152238
- DE-A1- 102006 019 634
- DE-A1- 102021 133 918
- US-A1- 2011 209 691
- US-A1- 2017 051 694

## Description

### BACKGROUND

### 1. Field

The present disclosure relates to a controller and a control method for an internal combustion engine.

### 2. Description of Related Art

A type of internal combustion engine using hydrogen as fuel is known. In such an internal combustion engine, hydrogen gas accumulates in the crankcase. It is thus desirable that the hydrogen concentration in the crankcase be below the lower limit of the combustible range. Therefore, for example, an internal combustion engine disclosed in Japanese Laid-Open Patent Publication No. 2021-127704 includes a ventilation fan that discharges hydrogen gas from the inside of the crankcase to the outside.

However, if a ventilation fan is provided, for example, a space for mounting the ventilation fan is required. In addition, for example, mounting an internal combustion engine equipped with a ventilation fan on a vehicle increases spatial constraint. Therefore, it is desired to reduce the hydrogen concentration in the crankcase without providing such a ventilation fan.
Besides, US 2011/209691 discloses a working gas circulation engine, US 2017/051694 discloses a controller for internal combustion engine, and DE 10 2021 133918 discloses an internal combustion engine with casing ventilation.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a controller for an internal combustion engine is provided, as defined in claim 1. The internal combustion engine uses hydrogen as fuel and includes a coupling passage that connects a crankcase and an intake passage to each other. The controller is configured to execute a control of causing an air-fuel ratio of an air-fuel mixture to be lower when a target output of the internal combustion engine is relatively high than when the target output is relatively low, and a pressure reduction process of reducing a pressure in the intake passage when the target output is less than a specific value. The pressure reduction process is a process of reducing the pressure in the intake passage to be lower than that before an execution of the pressure reduction process.

In another general aspect, a control method for an internal combustion engine is provided, as defined in claim 5. The internal combustion engine uses hydrogen as fuel and includes a coupling passage that connects a crankcase and an intake passage to each other. The control method includes: executing a control of causing an air-fuel ratio of an air-fuel mixture to be lower when a target output of the internal combustion engine is relatively high than when the target output is relatively low; and executing a pressure reduction process of reducing a pressure in the intake passage when the target output is less than a specific value. The pressure reduction process is a process of reducing the pressure in the intake passage to be lower than that before an execution of the pressure reduction process.

Other features and aspects will be apparent from the following detailed description, the drawings, and the claims.

### BRIEF DESCRIPTION OF THE DRAWINGS

Fig. 1 is a schematic diagram showing the configuration of an internal combustion engine according to one embodiment.
Fig. 2 is a flowchart showing a procedure of processes executed by a controller of the internal combustion engine shown in Fig. 1.
Fig. 3 is a flowchart showing a procedure of processes executed by a controller according to a modification.
Fig. 4 is a flowchart showing a procedure of processes executed by a controller according to another modification.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications of the methods, apparatuses, and/or systems described are apparent to one of ordinary skill in the art. Sequences of operations are exemplary, and may be changed as apparent to one of ordinary skill in the art, except for operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

A controller 100 for an internal combustion engine 10 mounted on vehicle 500 according to one embodiment will now be described.

### <Configuration of Internal Combustion Engine>

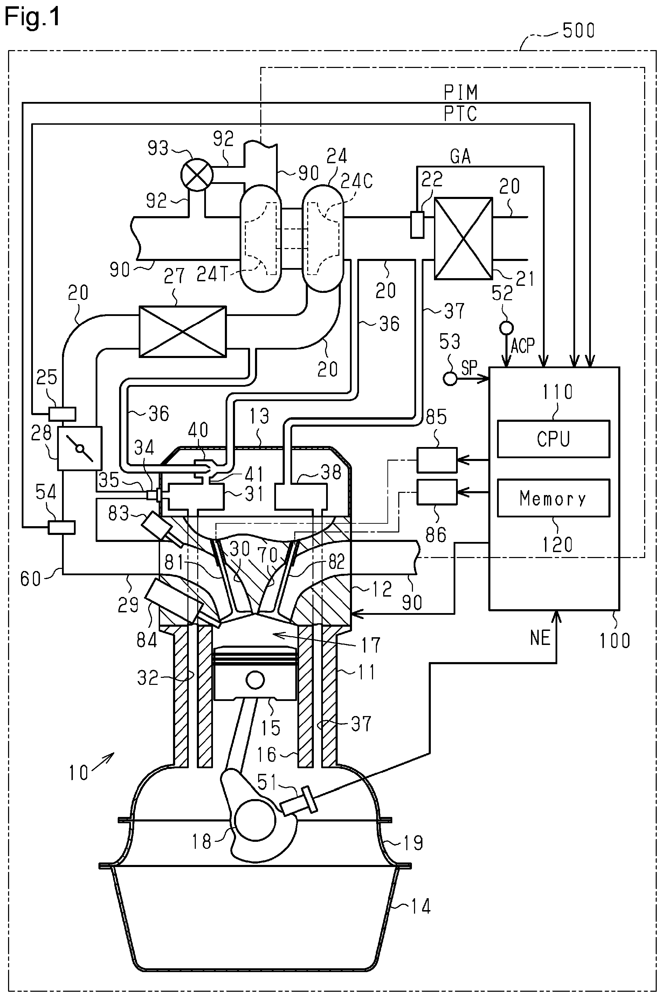

As shown in Fig. 1, the internal combustion engine 10 mounted on the vehicle 500 includes a cylinder block 11, a cylinder head 12, a head cover 13, and an oil pan 14. The cylinder block 11 includes a cylinder 16 in which a piston 15 is disposed to reciprocate.

The cylinder head 12 includes an intake port 30 that conducts intake air into a combustion chamber 17 of the internal combustion engine 10 and an exhaust port 70 that discharges exhaust gas from the combustion chamber 17. The intake port 30 is provided with an intake valve 81. The drive system of the intake valve 81 is provided with an intake-side variable valve timing mechanism 85, which is a variable valve actuation mechanism that changes valve timing (opening/closing timing) of the intake valve 81. The exhaust port 70 is provided with an exhaust valve 82. The drive system of the exhaust valve 82 is provided with an exhaust-side variable valve timing mechanism 86, which is a variable valve actuation mechanism that changes valve timing (opening/closing timing) of the exhaust valve 82.

The cylinder head 12 also includes a port injection valve 83 that injects hydrogen as fuel into the intake port 30, a direct injection valve 84 that directly injects hydrogen into the combustion chamber 17, and an ignition plug (not shown).

A crankcase 19 is provided below the cylinder block 11. The crankcase 19 accommodates a crankshaft 18, which is an output shaft of the internal combustion engine 10. An oil pan 14 that stores lubricant is provided in a lower portion of the crankcase 19.

An intake manifold 29, which includes a surge tank 60, is connected to the upstream side of intake port 30. An intake pipe 20 is connected to the upstream side of the surge tank 60. The intake pipe 20, the surge tank 60, and the intake manifold 29 form an intake passage of the internal combustion engine 10.

The intake pipe 20 is provided with an air cleaner 21, an air flow meter 22, a compressor wheel 24C of a forced-induction device 24, an intercooler 27, a boost pressure sensor 25, and a throttle valve 28 arranged in that order from the upstream side to the downstream side of the intake pipe 20. The forced-induction device 24 is driven using exhaust gas discharged from the combustion chamber 17. The surge tank 60 is provided with an intake pressure sensor 54. The opening degree of the throttle valve 28 is changed by an electric motor.

The air cleaner 21 filters intake air taken into the intake pipe 20. The forced-induction device 24 compresses air in the intake pipe 20. The intercooler 27 cools the air that has passed through the compressor wheel 24C. The throttle valve 28 regulates the amount of intake air by adjusting the opening degree.

The air flow meter 22 detects an intake air amount GA. The boost pressure sensor 25 detects a boost pressure PTC at a downstream side of the compressor wheel 24C in the intake pipe 20. The intake pressure sensor 54 detects an intake pressure PIM, which is a pressure in the surge tank 60.

An exhaust passage 90 is connected to the downstream side of the exhaust port 70. A housing that accommodates a turbine wheel 24T of the forced-induction device 24 is connected to an intermediate portion of the exhaust passage 90. A bypass passage 92 connects a section of the exhaust passage 90 on the upstream side of the turbine wheel 24T to a section of the exhaust passage 90 on the downstream side of the turbine wheel 24T. A wastegate valve (hereinafter, referred to as WGV) 93 is provided in the bypass passage 92. The opening degree of the WGV 93 is adjusted by an actuator. The WGV 93 is a valve that adjusts the amount of exhaust gas flowing through the bypass passage 92. As the opening degree of the WGV 93 increases, the amount of exhaust gas that bypasses the turbine wheel 24T and passes through the bypass passage 92 increases. Accordingly, the boost pressure of the intake air, which is increased by the forced-induction device 24, decreases.

The internal combustion engine 10 is provided with a blow-by gas treating device, which treats gas leaking from the combustion chamber 17 into the crankcase 19 during a compression stroke or a combustion stroke, that is, so-called blow-by gas. The blow-by gas treating device includes a suction passage 32 configured to conduct the blow-by gas in the crankcase 19 to a main separator 31, which is an oil separator installed in the head cover 13. The end of the suction passage 32 connected to the main separator 31 opens in the crankcase 19.

The main separator 31 is connected to the surge tank 60 via a positive crankcase ventilation (PCV) valve 34, which is a differential pressure regulating valve, and a PCV passage 35. The PCV valve 34 opens when the pressure in the surge tank 60 becomes lower than the pressure in the main separator 31, thereby allowing the blow-by gas to flow from the main separator 31 to the surge tank 60. The suction passage 32, the main separator 31, the PCV valve 34, and the PCV passage 35 form a coupling passage that connects the surge tank 60, which forms part of the intake passage, to the crankcase 19.

For example, when the boost pressure of the forced-induction device 24 is relatively low, the pressure in the surge tank 60 is lower than the pressure in the main separator 31. Accordingly, the blow-by gas in the crankcase 19 is drawn into the surge tank 60 via the suction passage 32, the main separator 31, the PCV valve 34, and the PCV passage 35. The drawn-in blow-by gas is delivered to the combustion chamber 17 together with the intake air and burned therein.

An ejector 40 is connected to the main separator 31 via a connection passage 41. The ejector 40 is provided in the bypass passage 36. The bypass passage 36 connects a section of the intake pipe 20 on the upstream side of the compressor wheel 24C to a section of the intake pipe 20 on the downstream side of the compressor wheel 24C. The ejector 40 includes a constriction for generating a negative pressure by the Venturi effect.

The blow-by gas treating device is provided with an atmosphere introducing passage 37 for drawing in intake air into the crankcase 19 for scavenging. One of the opposite ends the atmosphere introducing passage 37 is connected to a section of the intake pipe 20 between the air cleaner 21 and the compressor wheel 24C. The atmosphere introducing passage 37 extends through the head cover 13, passes through the inside of the cylinder head 12 and the cylinder block 11, and is connected to the crankcase 19. An atmosphere-side separator 38, which is an oil separator installed in the head cover 13, is provided in the atmosphere introducing passage 37.

When the boost pressure of the forced-induction device 24 is relatively high, air flows through the bypass passage 36 from the downstream side to the upstream side of the compressor wheel 24C, so that a negative pressure is generated in the ejector 40. Due to the negative pressure generated in the ejector 40, the blow-by gas in the crankcase 19 is drawn into the ejector 40 through the suction passage 32, the main separator 31, and the connection passage 41. The blow-by gas drawn into the ejector 40 is conducted together with air into a section of the intake pipe 20 on the upstream side of the compressor wheel 24C via the bypass passage 36. The blow-by gas drawn into the intake pipe 20 is delivered to the combustion chamber 17 together with the intake air and burned therein.

The controller 100 controls the internal combustion engine 10. The controller 100 operates various devices to be operated, such as the throttle valve 28, the port injection valve 83, the direct injection valve 84, the ignition plug, the intake-side variable valve timing mechanism 85, the exhaust-side variable valve timing mechanism 86, and the WGV 93.

The controller 100 includes a central processing unit (hereinafter, referred to as a CPU) 110 and a memory 120, which stores programs and data that are used in control operations. The controller 100 executes various types of control operations by causing the CPU 110 to execute programs stored in the memory 120.

The controller 100 receives detection signals from the air flow meter 22, the boost pressure sensor 25, and the intake pressure sensor 54. The controller 100 also receives detection signals from a crank angle sensor 51, which detects the rotational angle of the crankshaft 18 (crank angle). The controller 100 calculates an engine rotation speed NE based on a detection signal of the crank angle sensor 51. Furthermore, the controller 100 receives detection signals from a vehicle speed sensor 53, which detects a vehicle speed SP of the vehicle 500 mounting the internal combustion engine 10, and an accelerator operation amount sensor 52, which detects an accelerator operation amount ACP of an accelerator pedal. The controller 100 calculates an engine load factor KL based on the engine rotation speed NE and the intake air amount GA. The engine load factor KL is a parameter that determines the amount of air filling the combustion chamber 17, and is the ratio of the inflow air amount per combustion cycle in one cylinder to a reference inflow air amount. The reference inflow air amount may be varied in accordance with the engine rotation speed NE.

The controller 100 calculates a target output Pe, which is a target value of an output required to be produced by the internal combustion engine 10, based on the accelerator operation amount ACP and the vehicle speed SP. The controller 100 executes a control of causing the air-fuel ratio of the air-fuel mixture to be lower when the target output Pe is relatively high than when the target output Pe is relatively low. For example, when the target output Pe is a first value, the controller 100 executes a control of causing the air-fuel ratio of the air-fuel mixture to be lower than that when the target output Pe is a second value, which is lower than the first value. More specifically, the controller 100 basically maintains the throttle valve 28 at an opening degree greater than or equal to a specified value, for example, at an opening degree close to the fully opened state, and sets a required injection amount Qd such that the required injection amount Qd increases as the target output Pe increases. The required injection amount Qd is a target value of the total amount of fuel injected from the port injection valve 83 and the direct injection valve 84. Then, the controller 100 controls the port injection valve 83 and the direct injection valve 84 such that the required injection amount Qd is obtained. As described above, in the internal combustion engine 10, basically, the output adjustment is performed by changing the air-fuel ratio of the air-fuel mixture through adjustment of not the intake air amount but the fuel injection amount.

The controller 100 calculates respective target valve timings of the intake valve 81 and the exhaust valve 82 based on the engine rotation speed NE, the engine load factor KL, and the like. The controller 100 performs drive control of the intake-side variable valve timing mechanism 85 and the exhaust-side variable valve timing mechanism 86 based on the respective target valve timings and the like.

The controller 100 calculates a target boost pressure PTCp based on the engine rotation speed NE, the engine load factor KL, and the like. The controller 100 performs a boost pressure control of the forced-induction device 24 by adjusting the opening degree of the WGV 93 based on the target boost pressure PTCp and the like.

### <Pressure Reduction Process>

As described above, during operation of the internal combustion engine 10, the throttle valve 28 is basically maintained at an opening degree close to the fully opened state. Therefore, the state in which the pressure in the intake passage decreases is limited, and the discharge of blow-by gas from the crankcase 19 to the surge tank 60 via the PCV passage 35 and the like is unlikely to proceed. Hydrogen gas contained in the blow-by gas is likely to be accumulated in the crankcase 19. If hydrogen gas is accumulated in the crankcase 19, the hydrogen gas may leak to the atmosphere during maintenance of the internal combustion engine 10. For example, such leakage of hydrogen gas is likely to occur when the amount of the lubricant stored in the oil pan 14 is checked by an oil level gauge or when the ignition plug is removed for inspection.

Therefore, in order to reduce the hydrogen concentration in the crankcase 19, the controller 100 executes a pressure reduction process. The pressure reduction process is a process of reducing the pressure in the intake passage when the target output Pe is relatively low and is less than a predetermined specific value. When the internal combustion engine 10 is in an idling state or immediately before the vehicle 500 stops, the target output Pe is relatively low. Therefore, in the present embodiment, it is determined that the target output Pe is less than the specific value when the internal combustion engine 10 is in an idling state or immediately before the vehicle 500 stops.

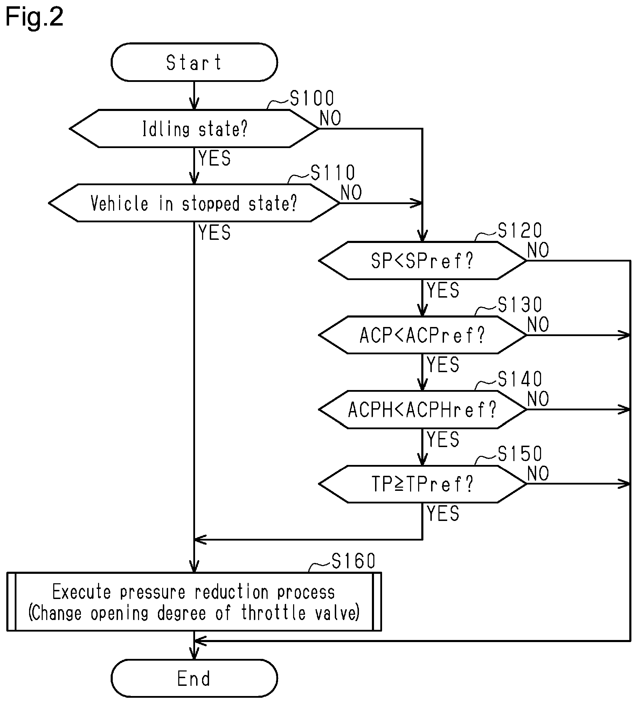

Fig. 2 shows a processing procedure for executing the pressure reduction process. The processes shown in Fig. 2 are implemented by the CPU 110 repeatedly executing programs stored in the memory 120 at specific intervals. In the following description, the number of each step is represented by the letter S followed by a numeral.

In the series of processes shown in Fig. 2, the CPU 110 first determines whether the current engine operating state is an idling state (S100). In the process of the S100, the CPU 110 acquires the accelerator operation amount ACP, for example, and determines that the engine operating state is an idling state if the acquired accelerator operation amount ACP is 0.

When it is determined that the engine operating state is an idling state (S100: YES), the CPU 110 determines whether the vehicle 500 is in a stopped state (S110). In the process of S110, the CPU 110 determines that the vehicle 500 is in a stopped state if a state in which the vehicle speed SP is 0 has continued for a specified time, for example.

When it is determined that the vehicle 500 is in a stopped state (S110: YES), the CPU 110 executes the pressure reduction process (S160). As the pressure reduction process, the CPU 110 executes an opening degree changing process of reducing the current opening degree of the throttle valve 28 by an amount corresponding to a specified value α. The specified value α is a predetermined value that is required to reduce the pressure in the surge tank 60 to a pressure required to discharge blow-by gas through the PCV passage 35. The CPU 110 executes the opening degree changing process by controlling the opening degree of the throttle valve 28.

When a negative determination is made in the process of S100 or when a negative determination is made in the process of S110, the CPU 110 executes the process of S120 and the subsequent processes.

In the process of S120, the CPU 110 determines whether the current vehicle speed SP is less than a threshold SPref. The threshold SPref is a predetermined value. The value of the threshold SPref is set such that it can be determined that the vehicle speed SP is low enough to determine that the vehicle 500 is about to stop based on the fact that the vehicle speed SP is less than the threshold SPref.

When it is determined that the vehicle speed SP is less than the threshold SPref (S120: YES), the CPU 110 determines whether the accelerator operation amount ACP is less than a threshold ACPref (S130). The threshold ACPref is a predetermined value. The value of the threshold ACPref is set such that it can be determined that the accelerator operation amount ACP is small enough to determine that the vehicle 500 is about to stop based on the fact that the accelerator operation amount ACP is less than the threshold ACPref.

When it is determined that the accelerator operation amount ACP is less than the threshold ACPref (S130: YES), the CPU 110 determines whether an accelerator amount of change ACPH is less than a threshold ACPHref (S140). The accelerator amount of change ACPH is an amount of change of the accelerator operation amount ACP per unit time. The threshold ACPHref is a predetermined value. The value of the threshold ACPHref is set such that it can be determined that the accelerator amount of change ACPH is small enough to determine that the vehicle 500 is about to stop based on the fact that the accelerator amount of change ACPH is less than the threshold ACPHref.

When it is determined that the accelerator amount of change ACPH is less than the threshold ACPHref (S140: YES), the CPU 110 executes the process of S150. In the process of S150, the CPU 110 determines whether a duration time TP, which is time during which a state in which all of the determinations of S120, S130, and S140 are affirmative continues, is longer than or equal to a threshold TPref. The threshold TPref is a predetermined value. The value of the threshold TPref is set such that it can be determined that the affirmative determinations in the processes of S120, S130, and S140 are not temporary but stable based on the fact that the duration time TP is longer than or equal to the threshold TPref.

When it is determined that the duration TP is longer than or equal to the threshold TPref (S150: YES), the CPU 110 executes the process of S160 described above to execute the pressure reduction process.

When the process of the S160 is completed, or when a negative determination is made in the process of any of processes of S120, S130, S140, and S150, the CPU 110 temporarily suspends the series of processes shown in Fig. 2.

### <Operation and Advantages>

Operation and advantages of the present embodiment will now be described.
(1) The pressure reduction process is executed when the internal combustion engine 10 is in an idling state and the vehicle 500 is in a stopped state. Also, when all of the determinations in the processes of S120, S130, S140, and S150 shown in Fig. 2 are affirmative, the vehicle 500 is about to stop and is highly likely to stop shortly. In this case, the pressure reduction process is executed. When the pressure reduction process is executed, the opening degree of the throttle valve 28 becomes smaller than that before the execution of the pressure reduction process, so that the pressure in the surge tank 60 decreases. When the pressure in the surge tank 60 decreases, the hydrogen gas accumulated in the crankcase 19 is discharged to the surge tank 60 via the PCV passage 35 and the like, so that the hydrogen concentration in the crankcase 19 decreases. Therefore, the hydrogen concentration in the crankcase 19 is reduced without providing a ventilation fan.
(2) The above-described pressure reduction process is executed when the internal combustion engine 10 is in an idling state and the vehicle 500 is in a stopped state or when the vehicle 500 is about to stop and is highly likely to stop shortly. Accordingly, when the vehicle 500 is stopped and then the operation of the internal combustion engine 10 is stopped, the hydrogen concentration in the crankcase 19 has already been reduced. Therefore, it is possible to prevent the hydrogen gas in the crankcase 19 from leaking to the atmosphere during maintenance of the internal combustion engine 10.

### <Modifications>

The above-described embodiment may be modified as follows. The above-described embodiment and the following modifications can be combined as long as the combined modifications remain technically consistent with each other.

To determine whether the target output Pe is less than the specific value, the processes of S100 and S110 and the processes of S120, S130, S140, and S150 shown in Fig. 2 are executed. However, whether the target output Pe is less than the specific value may be determined based on other conditions.

It may be determined that the target output Pe is less than a predetermined specific value by comparing the target output Pe with the specific value.

Although the process of reducing the opening degree of the throttle valve 28 is executed as the pressure reduction process, another process may be executed.

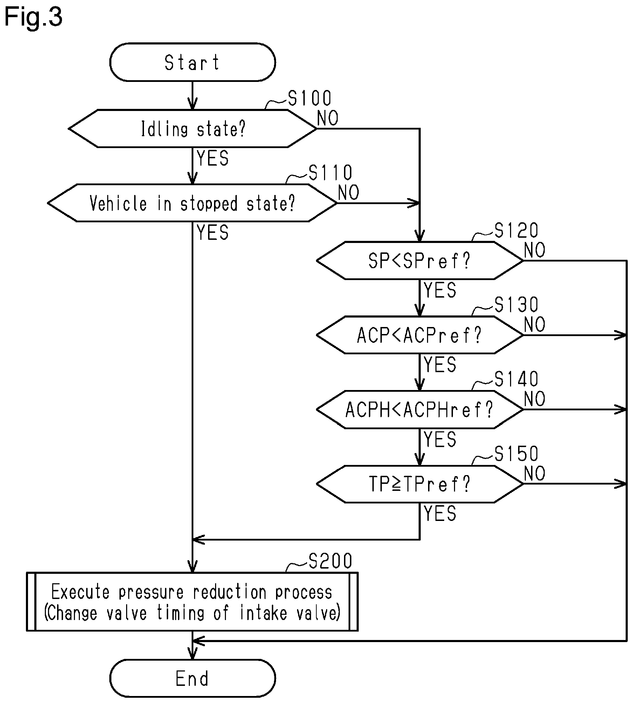

The process of S200 shown in Fig. 3 may be executed as the pressure reduction process. That is, as the pressure reduction process, a valve timing changing process may be executed to advance the current valve timing of the intake valve 81 by an amount corresponding to a specified value β. The specified value β is a predetermined value of an advanced amount of the opening timing of the intake valve 81 that is required to reduce the pressure in the surge tank 60 to a pressure required to discharge blow-by gas through the PCV passage 35. The CPU 110 executes the valve timing changing process through control of the intake-side variable valve timing mechanism 85. When the opening timing of the intake valve 81 is advanced in this manner, the amount of air drawn into the cylinder from the surge tank 60 and the intake manifold 29 is increased in the intake stroke, so that the amount of air in the surge tank 60 decreases. When the amount of air in the surge tank 60 decreases, the pressure in the surge tank 60 decreases. Therefore, also in this modification, the pressure in the surge tank 60 is reduced. When this modification is employed, the variable valve actuation mechanism provided in the drive system of the intake valve 81 may include a mechanism capable of changing the valve opening timing of the intake valve 81.

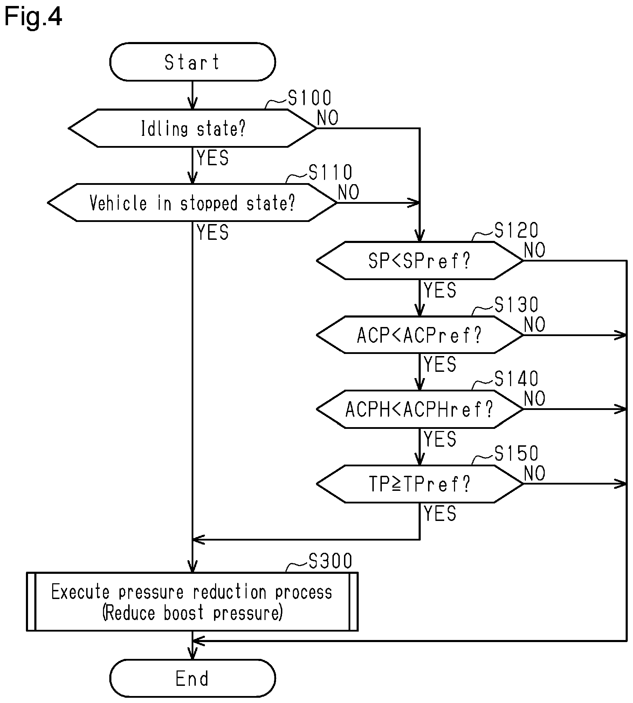

The process of S300 shown in Fig. 4 may be executed as the pressure reduction process. That is, as the pressure reduction process, a process of reducing the current boost pressure of the forced-induction device 24 by an amount corresponding to a specified value γ may be executed. The specified value γ is a predetermined value of a reduction amount of the boost pressure that is required to reduce the pressure in the surge tank 60 to a pressure required to discharge blow-by gas through the PCV passage 35. The CPU 110 executes a process of reducing the boost pressure by the amount corresponding to the specified value γ by increasing the opening degree of the WGV 93 through the opening degree adjustment of the WGV 93 and increasing the amount of exhaust gas bypassing the turbine wheel 24T. When the boost pressure is reduced in this manner, the pressure in the intake passage downstream of the compressor wheel 24C is reduced, so that the pressure in the surge tank 60 is also reduced. Therefore, also in this modification, the pressure in the surge tank 60 is reduced.

The boost pressure may be reduced in a different manner. In a case in which the forced-induction device 24 is a variable displacement forced-induction device including a nozzle vane, the boost pressure may be reduced by an amount corresponding to the specified value γ through a change in the opening degree of the nozzle vane. Further, in a case in which the forced-induction device 24 is an electric forced-induction device in which the compressor wheel 24C is rotated by an electric motor, the boost pressure may be reduced by the specified value γ through a change in the rotation speed of the electric motor.

As the above-described pressure reduction process, at least one of the process of S160 shown in Fig. 2, the process of S200 shown in Fig. 3, and the process of S300 shown in Fig. 4 may be executed.

The expression "at least one" as used herein means "one or more" of desired options. As an example, the expression "at least one" as used herein means "only one option" or "both of two options" if the number of options is two. As another example, the expression "at least one" used herein means "only one option" or "a combination of any two or more options" if the number of options is three or more.

Although the PCV passage 35 is connected to the surge tank 60, the PCV passage 35 may be connected to any section of the intake passage if the section is downstream of the throttle valve 28.

The internal combustion engine 10 may include only one of the port injection valve 83 and the direct injection valve 84.

If the process of S300 shown in Fig. 4 is not executed, the internal combustion engine 10 does not necessarily need to include the forced-induction device 24.

If the process of S200 shown in Fig. 3 is not executed, the internal combustion engine 10 does not necessarily need to include the intake-side variable valve timing mechanism 85.

The internal combustion engine 10 does not necessarily need to include the exhaust-side variable valve timing mechanism 86.

The controller is not limited to a device that includes the CPU 110 and the memory 120, and executes software processing. For example, the controller may include a dedicated hardware circuit (e.g. an application specific integrated circuit: ASIC) that executes at least part of the processes executed in the above-described embodiment. That is, the controller may be processing circuitry that has any one of the following configurations (a) to (c).
(a) Processing circuitry including a processor that executes all of the above-described processes according to programs and a program storage device such as a ROM that stores the programs.
(b) Processing circuitry including a processor and a program storage device that execute part of the above-described processes according to the programs and a dedicated hardware circuit that executes the remaining processes.
(c) Processing circuitry including a dedicated hardware circuit that executes all of the above-described processes.

One or any desired number of software processing devices that each include a processor and a program storage device and one or any desired number of dedicated hardware circuits may be provided.

Various changes in form and details may be made to the examples above without departing from the scope of the claims. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuit are combined differently, and/or replaced or supplemented by other components or their equivalents. The scope of the herein claimed invention is not defined by the detailed description, but by the claims.

## Claims

1. A controller (100) for an internal combustion engine (10) mounted on a vehicle (500) and using hydrogen as fuel, wherein
the internal combustion engine (10) includes a coupling passage (31, 32, 34, 35) that connects a crankcase (19) and an intake passage (20, 29, 60) to each other, the intake passage (20, 29, 60) includes a throttle valve (28)
the controller (100) is configured to execute
a control of causing the throttle valve (28) to maintain at an opening degree close to a fully opened state during operation of the internal combustion engine (10),
a control of causing an air-fuel ratio of an air-fuel mixture to be lower when a target output of the internal combustion engine (10) is relatively high than when the target output is relatively low, and
a pressure reduction process of reducing a pressure in the intake passage (20, 29, 60) in response to a determination that the internal combustion engine (10) is in an idling state and the vehicle (500) is in a stopped state or that the vehicle (500) is about to stop, and
the pressure reduction process is a process of reducing the pressure in the intake passage (20, 29, 60) to be lower than that before an execution of the pressure reduction process.

2. The controller (100) for the internal combustion engine (10) according to claim 1, wherein
the pressure reduction process includes reducing an opening degree of the throttle valve (28).

3. The controller (100) for the internal combustion engine (10) according to claim 1 or 2, wherein
the internal combustion engine (10) includes a variable valve actuation mechanism (85) that changes a valve opening timing of an intake valve (81), and
the pressure reducing process includes advancing the valve opening timing.

4. The controller (100) for the internal combustion engine (10) according to any one of claims 1 to 3, wherein
the internal combustion engine (10) includes a forced-induction device (24) that compresses air in the intake passage (20, 29, 60), and
the pressure reduction process includes reducing a boost pressure of the forced-induction device (24).

5. A control method for an internal combustion engine (10) mounted on a vehicle (500), wherein
the internal combustion engine (10) uses hydrogen as fuel and includes a coupling passage (31, 32, 34, 35) that connects a crankcase and an intake passage (20, 29, 60) to each other, the intake passage (20, 29, 60) including a throttle valve (28),
the control method comprises:
executing a control of causing the throttle valve (28) to maintain at an opening degree close to a fully opened state during operation of the internal combustion engine (10);
executing a control of causing an air-fuel ratio of an air-fuel mixture to be lower when a target output of the internal combustion engine (10) is relatively high than when the target output is relatively low; and
executing a pressure reduction process of reducing a pressure in the intake passage (20, 29, 60) in response to a determination that the internal combustion engine (10) is in an idling state and the vehicle (500) is in a stopped state or that the vehicle (500) is about to stop, and
the pressure reduction process is a process of reducing the pressure in the intake passage (20, 29, 60) to be lower than that before an execution of the pressure reduction process.

## Patentansprüche

1. Steuerung (100) für einen Verbrennungsmotor (10), der an einem Fahrzeug (500) montiert ist und Wasserstoff als Kraftstoff verwendet, wobei
der Verbrennungsmotor (10) einen Kupplungskanal (31, 32, 34, 35) beinhaltet, der ein Kurbelgehäuse (19) und einen Ansaugkanal (20, 29, 60) miteinander verbindet, wobei der Ansaugkanal (20, 29, 60) ein Drosselventil (28) beinhaltet
wobei die Steuerung (100) konfiguriert ist, um Folgendes auszuführen
eine Steuerung zum Bewirken, dass die Drosselklappe (28) während eines Betriebs des Verbrennungsmotors (10) einen Öffnungsgrad nahe einem vollständig geöffneten Zustand beibehält,
eine Steuerung zum Bewirken, dass ein Luft-Kraftstoff-Verhältnis eines Luft-Kraftstoff-Gemischs niedriger ist, wenn ein Sollausgang des Verbrennungsmotors (10) relativ hoch ist, als wenn der Sollausgang relativ niedrig ist, und
einen Druckreduzierungsprozess zum Reduzieren eines Drucks in dem Ansaugkanal (20, 29, 60) als Reaktion auf eine Bestimmung, dass der Verbrennungsmotor (10) in einem Leerlaufzustand ist und das Fahrzeug (500) in einem angehaltenen Zustand ist oder dass das Fahrzeug (500) kurz davor ist, anzuhalten, und
wobei der Druckreduzierungsprozess ein Prozess ist, bei dem der Druck in dem Ansaugkanal (20, 29, 60) reduziert wird, um niedriger zu sein als vor einer Ausführung des Druckreduzierungsprozesses.

2. Steuerung (100) für den Verbrennungsmotor (10) nach Anspruch 1, wobei
der Druckreduzierungsprozess ein Reduzieren eines Öffnungsgrads des Drosselventils (28) beinhaltet.

3. Steuerung (100) für den Verbrennungsmotor (10) nach Anspruch 1 oder 2, wobei
der Verbrennungsmotor (10) einen variablen Ventilbetätigungsmechanismus (85) beinhaltet, der einen Ventilöffnungszeitpunkt eines Einlassventils (81) ändert, und
der Druckreduzierungsprozess ein Vorverstellen des Ventilöffnungszeitpunkts beinhaltet.

4. Steuerung (100) für den Verbrennungsmotor (10) nach einem der Ansprüche 1 bis 3, wobei
der Verbrennungsmotor (10) eine Zwangseinleitvorrichtung (24) beinhaltet, die Luft in dem Ansaugkanal (20, 29, 60) komprimiert, und
der Druckreduzierungsprozess ein Reduzieren eines Ladedrucks der Zwangseinleitvorrichtung (24) umfasst.

5. Steuerungsverfahren für einen Verbrennungsmotor (10), der an einem Fahrzeug (500) montiert ist, wobei
der Verbrennungsmotor (10) Wasserstoff als Kraftstoff verwendet und einen Kupplungskanal (31, 32, 34, 35) beinhaltet, der ein Kurbelgehäuse und einen Ansaugkanal (20, 29, 60) miteinander verbindet, wobei der Ansaugkanal (20, 29, 60) ein Drosselventil (28) beinhaltet,
wobei das Steuerungsverfahren Folgendes umfasst:
Ausführen einer Steuerung zum Bewirken, dass die Drosselklappe (28) während eines Betriebs des Verbrennungsmotors (10) einen Öffnungsgrad nahe einem vollständig geöffneten Zustand beibehält;
ausführen einer Steuerung zum Bewirken, dass ein Luft-Kraftstoff-Verhältnis eines Luft-Kraftstoff-Gemischs niedriger ist, wenn ein Sollausgang des Verbrennungsmotors (10) relativ hoch ist, als wenn der Sollausgang relativ niedrig ist; und
Ausführen eines Druckreduzierungsprozesses zum Reduzieren eines Drucks in dem Ansaugkanal (20, 29, 60) als Reaktion auf eine Bestimmung, dass der Verbrennungsmotor (10) in einem Leerlaufzustand ist und das Fahrzeug (500) in einem angehaltenen Zustand ist oder dass das Fahrzeug (500) kurz davor ist, anzuhalten, und
wobei der Druckreduzierungsprozess ein Prozess ist, bei dem der Druck in dem Ansaugkanal (20, 29, 60) reduziert wird, um niedriger zu sein als vor einer Ausführung des Druckreduzierungsprozesses.

## Revendications

1. Dispositif de commande (100) pour un moteur à combustion interne (10) monté sur un véhicule (500) et utilisant de l'hydrogène comme carburant, dans lequel
le moteur à combustion interne (10) comprend un passage de couplage (31, 32, 34, 35) qui relie un carter (19) et un passage d'admission (20, 29, 60) l'un à l'autre, le passage d'admission (20, 29, 60) comprenant un papillon des gaz (28),
le dispositif de commande (100) est configuré pour exécuter
une commande qui amène le papillon des gaz (28) à se maintenir à un degré d'ouverture proche d'un état entièrement ouvert pendant un fonctionnement du moteur à combustion interne (10),
une commande qui amène un rapport air-carburant d'un mélange air-carburant à être plus faible quand une sortie cible du moteur à combustion interne (10) est relativement élevée que quand la sortie cible est relativement faible, et
un processus de réduction de pression destiné à réduire une pression dans le passage d'admission (20, 29, 60) en réponse à une détermination que le moteur à combustion interne (10) est dans un état de ralenti et le véhicule (500) est dans un état arrêté ou que le véhicule (500) est sur le point de s'arrêter, et
le processus de réduction de pression est un processus de réduction de la pression dans le passage d'admission (20, 29, 60) pour être plus basse que celle avant une exécution du processus de réduction de pression.

2. Dispositif de commande (100) pour le moteur à combustion interne (10) selon la revendication 1, dans lequel
le processus de réduction de pression comprend le fait de réduire un degré d'ouverture du papillon des gaz (28).

3. Dispositif de commande (100) pour le moteur à combustion interne (10) selon la revendication 1 ou 2, dans lequel
le moteur à combustion interne (10) comprend un mécanisme d'actionnement de soupape variable (85) qui change un calage d'ouverture de soupape d'une soupape d'admission (81), et
le processus de réduction de pression comprend le fait d'avancer le calage d'ouverture de soupape.

4. Dispositif de commande (100) pour le moteur à combustion interne (10) selon l'une quelconque des revendications 1 à 3, dans lequel
le moteur à combustion interne (10) comprend un dispositif d'admission forcée (24) qui comprime de l'air dans le passage d'admission (20, 29, 60), et
le processus de réduction de pression comprend le fait de réduire une pression de suralimentation du dispositif d'admission forcée (24).

5. Procédé de commande pour un moteur à combustion interne (10) monté sur un véhicule (500), selon lequel
le moteur à combustion interne (10) utilise de l'hydrogène comme carburant et comprend un passage de couplage (31, 32, 34, 35) qui relie un carter et un passage d'admission (20, 29, 60) l'un à l'autre, le passage d'admission (20, 29, 60) comprenant un papillon des gaz (28),
le procédé de commande comprend :
l'exécution d'une commande qui amène le papillon des gaz (28) à se maintenir à un degré d'ouverture proche d'un état entièrement ouvert lors du fonctionnement du moteur à combustion interne (10) ;
l'exécution d'une commande qui amène un rapport air-carburant d'un mélange air-carburant à être plus faible quand une sortie cible du moteur à combustion interne (10) est relativement élevée que quand la sortie cible est relativement faible ; et
l'exécution d'un processus de réduction de pression destiné à réduire une pression dans le passage d'admission (20, 29, 60) en réponse à une détermination que le moteur à combustion interne (10) est dans un état de ralenti et le véhicule (500) est dans un état arrêté ou que le véhicule (500) est sur le point de s'arrêter, et
le processus de réduction de pression est un processus de réduction de la pression dans le passage d'admission (20, 29, 60) pour être plus basse que celle avant une exécution du processus de réduction de pression.
